# EUROPEAN PATENT SPECIFICATION

(11) **EP 0 796 602 B1**
(45) Date of publication and mention of the grant of the patent: **09.10.2002**
(21) Application number: 97200757.9
(22) Date of filing: 13.03.1997
(51) Int. Cl.: A61H 33/02, F16K 15/14

(54) **Hydro-massage orifice with improved circuit for admission of air and discharge of the residual water**
Hydro-Massage-Öffnung mit verbessertem Kreislauf von Luftzufuhr und Abfluss von Restwasser
Orifice d'hydro massage avec circuit amélioré pour d'admission d'air et d'échappement de l'eau

(30) Priority: 19.03.1996 IT TV960016 U
(43) Date of publication of application: 24.09.1997
(73) Proprietor: Jacuzzi Europe Spa, 33098 Valvasone (Pordenone) (IT)
(72) Inventor: Furlan, Livio, 33170 Pordenone (IT)
(74) Representative: Dragotti, Gianfranco

(56) References cited:
- EP-A- 0 455 088
- EP-A- 0 557 233
- EP-A- 0 560 097
- WO-A-87/03665
- DE-A- 2 315 870

## Description

The present invention relates to a hydro-massage orifice which is provided with an improved circuit for the admission of air into it, and also with an innovative valve for drainage of the residual water at the end of the hydro- massage.

The latter valve also has assigned to it the further function, alternative to the above-mentioned one, of preventing the entry of water inside the orifice in normal use of the tub without hydro-massage.

As is known, hydro-massage consists in placing the body of the user immersed, for example, in a tub with a jet of water under pressure and mixed with air, supplied by one or more orifices mounted in the walls of the tub.

Various types of hydro-massage orifices are known, the operation of which generally consists in passing a certain quantity of water under pressure through a cross-section having the shape of a Venturi tube, thus causing, upstream of the said tube, an underpressure which in turn causes the intake of air which is mixed with the water expelled from the orifice in the form of a jet.

There are various problems and technical requirements connected with the orifices in question, one of which is of particular importance and it is known that it consists in having available a correctly timed and stable opening and closing of the circuit for the admission of the air inside the orifice. With regard to opening, this should be rapid enough so that the jet delivered by the orifice is constituted right from the start by a mixture of water and air.
As to the closing of the said circuit, this should also occur in a very short time in order, particularly at the end of the hydro-massage, to prevent a back-flow of water inside the air supply circuit Closing should additionally be stable, so as to prevent, also in this case, the above-mentioned back-flow of water during normal use of the bath-tub, that is to say, without hydro-massage being carried out.

A further problem which arises in the production of a hydro-massage orifice is that of avoiding the stagnation of a certain amount of water in the body of the orifice, which entails obvious hygiene problems, both for the tub and for personal use, particularly for public installations.

In order to understand the scope and the innovative importance of the present invention, it is sufficient to refer to Italian Patent No. 1 242 208 of the same Applicant, since the orifice which is the subject of the present invention is also, like that described in the aforesaid patent, of the total closure type. This should not of course be regarded as limitative insofar as the reference in question is not exclusive.

In any case, for understanding of the structure and configuration of the orifice which is the subject of the present invention, for the known part thereof reference to the description and to the drawings of the aforesaid patent is obviously implied.

A first drawback of a valve of this type lies in the difficulty with which the position of its closure member can be regulated, particularly insofar as the position of the latter is not directly controllable. It is in fact located inside the orifice, for which reason, therefore, the regulation of the stationary member which maintains the said closure member in a half-closed position is difficult to bring about and monitor.

A further drawback of the known valve in question also lies in the fact that the position of its closure member is not particularly stable and can also be modified simply by the passage of the discharge water, so that the valve is definitely no longer capable of carrying out the function assigned to it.

The same drawbacks can be found, for this valve, for its operation in which it prevents the entry of the water into the orifice during normal use of the tub, that is to say, without hydro-massage.

*From EP-A-0 560 097 an orifice for hydro-massage is furthermore known having a first a and a second valve, each consisting of a diaphragm made with a resilient and elastically deformable material, which are respectively associated to the air feeding pipe and to the water lead-in opening. Not even this orifice is entirely free from the above discussed drawbacks.*

*It is a main aim of the present invention to have a safe and reliable operation of a tub, not only during hydro-massage operations but also in operation without hydro-massage, in particular without the said drawbacks.*

*An orifice adapted to be fixed to a wall of a tub and having the features claimed here below reaches this and other aims. In particular, the orifice is free from the said drawbacks and permits the tub to be operated safely and reliably both for hydro-massage and without hydro-massage*.

*The* valve for opening and closing the air pipe is *in fact* provided with a closure member which does not have to execute movements in order to pass from one operating condition to the other and vice versa. From this point of view, the said valve can be regarded as being of the "stationary" type. More precisely, its closure member, being constituted by a diaphragm of resilient and elastically deformable material, is brought into one or the other of its two operating conditions simply by elastic deformation.

Even more precisely, the said diaphragm closure member, according to one of the fundamental characteristics of the present invention, has a stable rest condition, corresponding to the closure of the outlet of the air pipe, in which it is applied, particularly with its contour, to the said outlet, thus prearranging the valve in the closed condition.

Whilst a flow of water is conveyed in a known manner into the Venturi tube delivery sleeve, the said diaphragm closure member, by the effect of the intake of air which is created in the air delivery nozzle, disengages itself from the outlet of the air pipe and moves away from the latter by elastic deformation, thus prearranging the valve in the open condition.

Of particular advantage, therefore, is the characteristic consisting in the fact that the said closure member assumes the stable rest condition or closure condition of the air pipe simply when the suction of the operation with hydro-massage ceases, thus ensuring that it is impossible for even a minimum amount of water to enter the air pipe, since the said change of condition of the valve in question does not occur, as with conventional valves, through the effect of the initial back-flow of water into the air delivery nozzle, but simply through elastic deformation, which proves in practice to be rapid and stable.

Another notable object of the present invention is that of providing a valve of the above-mentioned type, the original configuration of which allows immediate passage, without particular resistance, from one operating condition to the other and vice versa.

Also the second valve with which the orifice according to the present invention is provided, that is to say, the valve which effects the discharge of the residual water from the orifice or prevents the entry of the water into the latter with the tub operating without hydro-massage, is provided with a closure member of resilient material and, according to one of the fundamental characteristics of the present invention, the said closure member functions substantially as a float, as will be explained in detail hereinafter.

As will be revealed more clearly below in the present description with reference to the accompanying figures, the said diaphragm closure member is housed in a known chamber provided on the body of the orifice in its lower part, which communicates on one side with the inside of the orifice and, on the other side, with the inside of the tub.

It is known that the aforesaid chamber, both with the tub operating with hydro-massage and without, is generally full of water so that the said diaphragm closure member engages the wall provided with the apertures for discharge of the water from the orifice so that the water cannot enter the orifice. Whilst the tub gradually empties when the hydro-massage finishes or when the tub, in normal operation, gradually empties, the said-chamber also empties itself of the water contained in it and the level of water therein decreases so that the diaphragm closure member floating on the water drops down, disengaging itself from the wall provided with the discharge pipes for the water which can emerge from the orifice without stagnating in the latter.

The characteristics and the advantages of the hydro-massage orifice according to the present invention will be revealed by the following detailed description of a non *exclusive* embodiment thereof, given with reference to the accompanying drawings, in which:
Figure 1 is a view in partial transverse section of the orifice according to the invention showing the valve for the opening/closing of the air pipe, in the closed condition;
Figure 2 is a view *analogous* to Figure 1 showing the valve for the opening/closing of the air pipe, in the open condition;
Figure 3 is a view in partial transverse section of the orifice according to the invention showing the valve for the discharge of the residual water from the orifice, in the open condition, and
Figure 4 is a view analogous to Figure 3 showing the discharge valve in the closed condition.

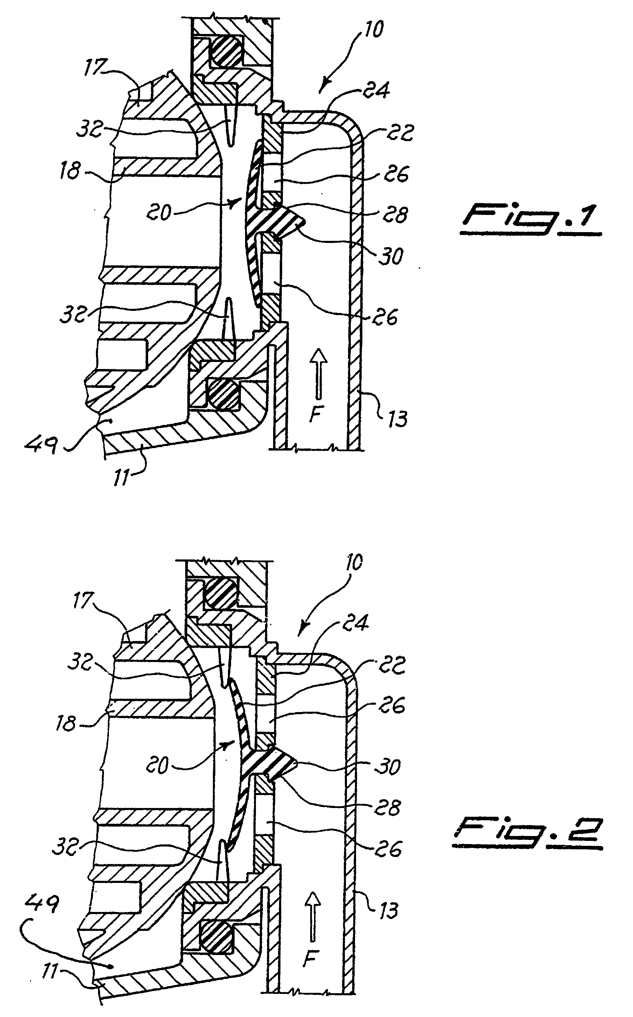

Referring firstly in particular to Figures 1 and 2, it can be seen that the hydro-massage orifice according to the invention, indicated as a whole by 10, has an outer casing 11 which *is adapted to be fixed to a wall of a tub 12 which can be operated to take a bath both with and "without hydro-massage. The casing 11* incorporates a water pipe fed by a pump (neither being shown) and an air pipe 13.

In the outer casing 11 there is housed in a known manner a spherical body 17 shown only partially since it is known per se, for example as described and illustrated in the Italian patent mentioned previously.

The spherical body 17 is integral with an air delivery nozzle 18 connected to the air pipe 13 and extending for a certain distance alone the longitudinal axis of symmetry of the orifice 10.

Between the rear end or inlet of the delivery nozzle 18 and the outlet end of the air pipe 13 is arranged a check valve, indicated as a whole by 20, which can assume two operating conditions, respectively the "rest" condition (illustrated in Figure 1) for closing the passage of air from the air pipe 13 or the "operating" condition (illustrated in Figure 2) wherein, being deformed by the effect of the suction produced by the entry of the flow of water in the orifice, in particular in a Venturi tube section of the latter, allows the opening of the outlet end of the air pipe 13, permitting the entry of the air into the relative delivery nozzle 18.

As can still be observed in particular in Figures 1 and 2, the said valve 20 comprises a closure member 22 which is constituted by a diaphragm of resilient and elastically deformable material such as, for example, rubber or the like. The diaphragm 22 is capable in particular of assuming a first operating condition, illustrated in Figure 1, corresponding to the closure of the air pipe 13, the said condition being a stable or rest condition.

It can be seen in particular in Figure 1 that the diaphram 22, in its first operating condition, has an essentially convex configuration with the outwardly curved part facing towards the inlet of the delivery nozzle 18, while its contour engages with the outlet of the air pipe 13, closing the latter. More precisely, the diaphragm 22 applies its contour to the outlet wall of the air pipe 13, indicated by 24, outside a series of air apertures or passages 26 so that the air which may come in the direction indicated by the arrow F cannot flow inside the orifice.

The diaphragm 22 is provided, substantially in a central region thereof, with a longitudinal extension 28, the free end 30 of which is enlarged and lodges in a suitable seating of the wall 24 of the air pipe 13.

Still more precisely, the length of the extension 28 comprised between the actual diaphragm 22 and the enlarged portion 30 corresponds substantially to the thickness of the wall 24 so that the diaphragm 22 cannot move along the longitudinal axis of the orifice.

The diaphragm closure member 22 is capable of assuming a second operating condition illustrated in particular in Figure 2, corresponding to the opening of the outlet of the air pipe 13 so that the flow of air from the latter can enter the orifice through the apertures or passages 26.

The passage of the diaphragm 22 from the condition in Figure 1 to that in Figure 2 is effected by elastic deformation. In particular, the said deformation is produced when a flow of water is conveyed into the orifice and in particular passes through the Venturi type water delivery sleeve (not shown), creating the aforesaid effect of suction which is produced in the delivery nozzle 18. This suction determines the "rearward" deformation of the diaphragm 22, permitting the aforesaid flow of air inside the orifice, which will be added to the flow of water, creating a flow composed of water and air under pressure, which obviously constitutes a hydro-massage jet.

According to one of the fundamental characteristics of the present invention, the aforesaid suction effect may also be not particularly intense, since the deformation of the diaphragm 22 does not require a particularly high level of stress, and furthermore the deformation occurs in a considerably reduced time.

According to a further characteristic of the orifice which is the subject of the invention, in order to limit the "rearward" deformation of the diaphragm 22, there is provided, behind the latter, a plurality of stationary stop projections or teeth 32 which arise from the inner surface of the body of the orifice and extend substantially radially and symmetrically round the longitudinal axis of the orifice 10. Against the said stops or teeth 32 will engage the contour of the diaphragm 22, the deformation of which is therefore limited accordingly.

It is clear that, when the delivery of the flow of water in the delivery sleeve for the latter ceases, and therefore the suction effect comes to an end in the air delivery nozzle 18, the diaphragm 22 is automatically brought by elastic deformation into its stable rest position shown in Figure 1, thus closing the air pipe 13 again.

From what is described above it is clear that the intervention of the valve 20, either by closing or opening the air pipe 13, is very well timed and particularly rapid, since it depends only on the deformation in one direction or in the opposite direction of the diaphragm 22, which does not require particular stresses to bring itself from one condition to the other or vice versa. It should also be remembered that the diaphragm 22 is not subjected to any movement which could compromise the reliability of operation, as already explained above for the valves of the conventional orifices.

The resilient material from which the diaphragm 22 is produced will be selected to be of suitable consistency in order to be able to be deformed in one direction or the other at a particularly high speed and therefore with a high degree of reliability of operation.

In addition, the selection of the material of the diaphragm 22 will be directed to a particular type of composition which renders it resistant to the numerous deformations to which it has to be subjected in operation.
For example, a suitable rubber mixture will be selected which has the functional characteristics of the case in question.

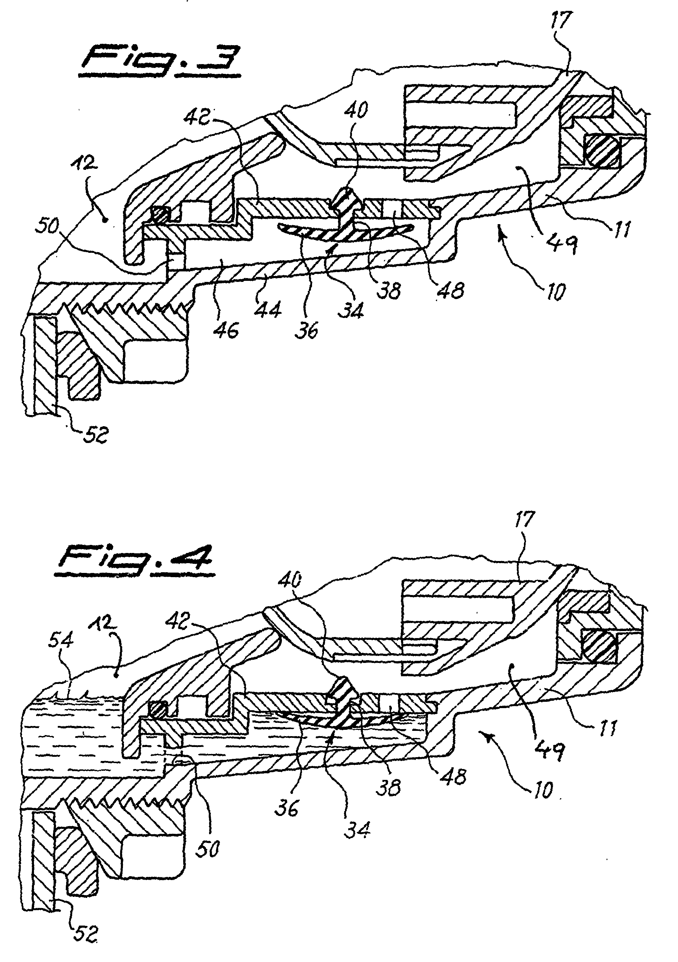

Referring now particularly to Figures 3 and 4, the orifice according to the present invention furthermore has a second valve indicated as a whole by 34, to which is assigned the double function of allowing the discharge of the residual water from the orifice 10 at the end of the hydro-massage and that of preventing the entry of water inside the body 11 of the orifice when the tub 12 is used in the normal manner, that is to say, without hydro-massage.

As can be observed from the aforesaid figures, the valve 34 has a closure member the configuration of which is substantially the same as that of the valve 20 described above, although its operation is slightly different.

The valve 34 also has, in fact, a diaphragm closure member 36 which is preferably made of resilient material and, however, of a material of such consistency as to float on the water insofar as the operation of the diaphragm 36 is substantially that of a float.

The diaphragm 36 also has, in a substantially central region thereof, an essentially central extension 38 which is inserted so as to slide in a suitable passage of a wall 42 of the body 11 of the orifice which defines, together with another wall 44 of the body 11 itself, a chamber 46 in which the diaphragm 36 is housed.

Still in Figures 3 and 4 it can be seen that the free end 40 of the extension 38 of the diaphragm 36 is enlarged and, when the diaphragm 36 is in the open position of the valve 34 illustrated in Figure 3, the said end 40 lodges in a suitable seating of the wall 42.

The chamber 46 communicates on one side, through a passage 48, with the inside *zone 49* of the orifice and, on the other side, through a passage 50, with the inside of the tub *12*, one wall of which is shown in part and indicated by 52.

The operation of the valve 34 is described herein-after, still referring in particular to Figures 3 and 4.

In the position in Figure 3, the diaphragm closure member 36 is in its "lowered" position in which the free end of its extension 28 lodges in the seating of the wall 42. The diaphragm 36 is therefore disengaged from the wall 42, liberating the passage 48 through which the residual water remaining in the *inside zone 49 of the* orifice can flow away at the end of the hydro-massage.

As stated above, there is assigned to the valve 34 the further task of preventing the entry of water *into the* inside *zone 49 of* the orifice when the tub *12* is used in the normal manner without hydro-massage and this condition is illustrated in Figure 4.

In the aforesaid figure it can be seen that the diaphragm 36 is now in its "raised" position and it is raised by floating on the water 54 present in the chamber 46, and will engage in the wall 42 of the body 11 of the orifice, closing the passage 48 and thus preventing the entry of water into the *inside zone 49 of the* orifice.

It is clear that a similar condition can also be observed in the case of operation with hydro-massage whenever the level of the water 54 in the tub *12* is above the height at which the passage 50 of the chamber 46 is located.

The material from which the diaphragm 36 of the valve 34 is made will also be, for example, resilient material such as rubber or the like. In this way the production of the first and the second valve of the orifice is unified with simplification of production and a reduction in the relative costs.

From what has been described above it is clear that also the operation of the second valve 34, in particular its passage from one condition to the other and vice versa, is particularly reliable and rapid and therefore such as to ensure stability of positioning in both conditions.

In the exemplary embodiment under consideration, the diaphragm 36 has an essentially convex shape like the diaphragm 22 of the first valve 20, but it is obvious that this shape should not be regarded as limitative, since the diaphragm 36 could also be flat.

Finally, it is clear that structurally or conceptually equivalent variations and/or modifications may be applied to the orifice according to the present invention, without thereby departing from its scope of protection.

## Claims

1. *Hydro-massage orifice (10) having an outer casing (11) adapted to be fixed to a wall of a tub (12) which incorporates a water feeding pipe and an air feeding pipe (13), and comprising within the casing (11)* :
- *an air delivery nozzle (18) associated, substantially coaxially, to a water delivery sleeve of substantially convergent*/*divergent cross-section so as to create an intake of air in the said delivery nozzle (18) when water is fed into the said sleeve,*
- *a first valve (20) which is provided with a diaphragm (22) made of resilient and elastically deformable material as a closure member which is capable of assuming either a stable or rest condition corresponding to the closure of the air pipe (13) or a second condition, corresponding to the opening of the air pipe (13), due to the suction caused by the water fed into the water delivery sleeve*
- *a second valve (34), which is also provided with a diaphragm as closure member (36) made of resilient material associated to passages (48) provided in a wall (42) at the bottom of the casing (11) so as to communicate on one side (48) with the inside (49) of the latter and on the other side (50) with the inside of the tub (12), for the discharge of the residual water from the orifice at the end of the hydro-massage and also capable of preventing the entry of water into the casing (11) of the orifice (10) with the tub in normal operation without hydro-massage,*
***characterized in that***
- *the diaphragm (22) of the said first valve (20), in the stable position, has a substantially concave configuration with the concavity turned towards an outlet wall (24) of the air pipe (13), while its contour engages with the said wall outside the region in which are provided the passages (26) for the air from the air pipe to the air delivery nozzle (18), and*
- *the said diaphragm (36) is constituted by a substantially floating element which is arranged in a chamber (46) provided under the said wall (42) at the bottom of the casing (11) of the orifice (10) and is capable of closing the said passages (48) when the said chamber (46) is full of water and of opening the same passages (48) on the gradual emptying of the water from the said chamber (46).*

2. Hydro-massage orifice (10) according to Claim 1, **characterized in that** the said diaphragm (22) has, in a substantially central region thereof, a projecting extension (28), the end (30) of which is enlarged and lodges in a seating in the outlet wall (24) of the air pipe (13), the engagement between the said enlarged portion (30) of the extension (28) in the said seating of the wall (24) preventing movements of the diaphragm (22) in the direction of the air delivery nozzle (18).

3. Hydro-massage orifice (10) according to Claim 2, **characterized in that**, when water is fed into the water delivery sleeve of convergent/divergent cross-section, the suction effect causes elastic deformation of the diaphragm (22), which moves away from the said outlet wall (24) of the pipe (13), liberating the passages (26) for the air, which is thus introduced into the casing (11) of the orifice (10).

4. Hydro-massage orifice (10) according to *any of the Claims 1 to 3*, **characterized in that** the elastic deformation of the diaphragm (22), in the said second condition of the first valve (20), is limited by stops (32) provided in the casing (11) of the orifice (10) and arranged behind the said diaphragm (22).

5. Hydro-massage orifice (10) according to *any of the Claims 1 to 4,* **characterized in that**, on cessation of the said suction caused by the entry of the flow of water into the water delivery sleeve, the said diaphragm (22) *of the first valve (20)* is brought automatically by elastic deformation into the *rest condition*.

6. Hydro-massage orifice (10) according to *any of the Claims 1 to 5*, **characterized in that** the said diaphragm (22) *of the first valve (20) is not moving longitudinally in* the passage *between the said conditions.*

7. Hydro-massage orifice according to Claim 1, **characterized in that** the said diaphragm (22) is constituted of an elastic material such as rubber or the like.

8. Hydro-massage orifice (10) according to *any of the Claims 1 to 7*, **characterized in that** the diaphragm (36) of the said second valve (34) has a shape which is substantially concave in the direction of *the said* wall (42) *at the bottom of the casing (11) of the orifice (10).*

9. Hydro-massage orifice (10) according to *any of the Claims 1 to 7*, **characterized in that** the diaphragm (36) of the said second valve (34) has a substantially flat *shape.*

10. Hydro-massage orifice according to *any of the Claims 1 to 9*, **characterized in that** the said diaphragm (36) of the said second valve (34) has, in a substantially central region thereof, a projecting extension (38), the end (40) of which is enlarged and lodges in a seating of the said wall (42) *at the bottom of the casing (11) of the orifice (10)* while the body of the said extension (38) is slidable, to a limited extent, inside a passage provided in the said wall (42).

## Patentansprüche

1. Hydromassage-Öffnung (10) mit einem äußeren Gehäuse (11), das daran angepasst ist, an der Wand einer Wanne (12) befestigt zu werden, die ein Wasserzuführrohr und ein Luftzuführrohr (13) enthält, und innerhalb des Gehäuses (11) aufweist:
- eine Luftlieferdüse (18), die im Wesentlichen koaxial mit einer Wasserlieferhülse von im Wesentlichen konvergierendem/divergierendem Querschnitt so verknüpft ist, dass ein Ansaugen von Luft in die Lieferdüse (18) erzeugt wird, wenn Wasser in die Hülse zugeführt wird,
- ein erstes Ventil (20), das mit einer Membran (22) versehen ist, die aus federndem und elastisch verformbarem Material als ein Verschlussteil hergestellt ist, das entweder einen stabilen oder Ruhezustand entsprechend dem Verschluss des Luftrohres (13) oder einen zweiten Zustand entsprechend dem Öffnen des Luftrohres (13) auf Grund des Ansaugens, das durch das in die Wasserlieferhülse zugeführte Wasser verursacht wird, annimmt,
- ein zweites Ventil (34), das ebenfalls mit einer Membran als Verschlussteil (36) versehen ist, das aus einem federnden Material hergestellt ist, das mit Durchgängen (48) verknüpft ist, die in einer Wand (42) an dem Boden des Gehäuses (11) so vorgesehen sind, dass sie auf einer Seite (48) mit der Innenseite (49) des Letzteren und auf der anderen Seite (50) mit der Innenseite der Wanne (12) in Verbindung stehen, für die Ausgabe des Restwassers von der Öffnung an dem Ende der Hydromassage, und die auch das Eintreten von Wasser in das Gehäuse (11) der Öffnung (10) verhindern können, wenn die Wanne im Normalbetrieb ohne Hydromassage ist,
**dadurch gekennzeichnet, dass**
- die Membran (22) des ersten Ventiles (20) in der stabilen Position eine im Wesentlichen konkave Konfiguration aufweist, wobei die Konkavität zu einer Auslasswand (24) des Luftrohres (13) gedreht ist, während seine Kontur mit der Wand außerhalb des Bereiches in Eingriff steht, in dem die Durchgänge (26) für die Luft von dem Luftrohr zu der Luftlieferdüse (18) vorgesehen sind, und
- die Membran (36) aus einem im Wesentlichen schwimmenden Element aufgebaut ist, das in einer Kammer (46) angeordnet ist, die unterhalb der Wand (42) an dem Boden des Gehäuses (11) der Öffnung (10) vorgesehen ist, und das die Durchgänge (48) schließen kann, wenn die Kammer (46) voll Wasser ist, und das die gleichen Durchgänge (48) bei allmählichem Entleeren des Wassers von der Kammer (46) öffnen kann.

2. Hydromassage-Öffnung (10) nach Anspruch 1, **dadurch gekennzeichnet, dass** die Membran (22) in einem im Wesentlichen mittleren Bereich davon eine vorstehende Erstreckung (28) aufweist, deren Ende (30) vergrößert ist und in einem Sitz in der Auslasswand (24) des Luftrohres (13) sitzt, wobei der Eingriff zwischen dem vergrößerten Abschnitt (30) der Erstreckung (28) in dem Sitz der Wand (24) die Bewegungen der Membran (22) in die Richtung der Luftlieferdüse (18) verhindert.

3. Hydromassage-Öffnung (10) nach Anspruch 2, **dadurch gekennzeichnet, dass** wenn Wasser in die Wasserlieferhülse des konvergierenden/divergierenden Querschnittes zugeführt wird, der Saugeffekt eine elastische Verformung der Membran (22) verursacht, die sich von der Auslasswand (24) des Rohres (13) wegbewegt, wodurch die Durchgänge (26) für die Luft freigegeben werden, die somit in das Gehäuse (11) der Öffnung (10) eingeführt wird.

4. Hydromassage-Öffnung (10) nach einem der Ansprüche 1 bis 3, **dadurch gekennzeichnet, dass** die elastische Verformung der Membran (22) in dem zweiten Zustand des ersten Ventiles (20) durch Anschläge (32) begrenzt wird, die in dem Gehäuse (11) der Öffnung (10) vorgesehen sind und hinter der Membran (22) angeordnet sind.

5. Hydromassage-Öffnung (10) nach einem der Ansprüche 1 bis 4, **dadurch gekennzeichnet, dass** auf die Beendigung des Ansaugens, das durch den Eintritt des Wasserflusses in die Wasserlieferhülse verursacht wird, die Membran (22) des ersten Ventiles (20) automatisch durch die elastische Verformung in den Ruhezustand gebracht wird.

6. Hydromassage-Öffnung (10) nach einem der Ansprüche 1 bis 5, **dadurch gekennzeichnet, dass** die Membran (22) des ersten Ventiles (20) sich nicht longitudinal in dem Durchgang zwischen den Zuständen bewegt.

7. Hydromassage-Öffnung (10) nach Anspruch 1, **dadurch gekennzeichnet, dass** die Membran (22) aus einem elastischen Material wie Gummi oder Ähnlichem aufgebaut ist.

8. Hydromassage-Öffnung (10) nach einem der Ansprüche 1 bis 7, **dadurch gekennzeichnet, dass** die Membran (36) des zweiten Ventiles (34) eine Form aufweist, die im Wesentlichen konkav in der Richtung der Wand (42) an dem Boden des Gehäuses (11) der Öffnung (10) ist.

9. Hydromassage-Öffnung (10) nach einem der Ansprüche 1 bis 7, **dadurch gekennzeichnet, dass** die Membran (36) des zweiten Ventiles (34) eine im Wesentlichen flache Form aufweist.

10. Hydromassage-Öffnung (10) nach einem der Ansprüche 1 bis 9, **dadurch gekennzeichnet, dass** die Membran (36) des zweiten Ventiles (34) in einem im Wesentlichen mittleren Bereich davon eine vorstehende Erstreckung (38) aufweist, deren Ende (40) vergrößert ist und in einem Sitz der Wand (42) an dem Boden des Gehäuses (11) der Öffnung (10) sitzt, während der Körper der Erstreckung (38) in einem begrenzten Ausmaß innerhalb eines Durchganges gleitend verschiebbar ist, der in der Wand (42) vorgesehen ist.

## Revendications

1. Orifice d'hydro-massage (10) ayant un carter extérieur (11) adapté pour être fixé sur une paroi d'une baignoire (12), qui comporte un tuyau d'alimentation en eau et un tuyau d'alimentation en air (13) et comportant à l'intérieur du carter (11) :
- une buse de fourniture d'air (18) associée, sensiblement coaxialement, à un manchon de fourniture d'eau d'une coupe transversale sensiblement convergente/divergente, de manière à créer une admission d'air dans ladite buse de fourniture (18) lorsque de l'eau est alimentée dans ledit manchon,
- une première vanne (20) qui est munie d'une membrane (22) constituée d'un matériau résilient et déformable de manière élastique servant d'élément de fermeture qui peut prendre un état stable ou d'appui correspondant à la fermeture du tuyau d'air (13) ou un second état, correspondant à l'ouverture du tuyau d'air (13), du fait de l'aspiration provoquée par l'alimentation en eau dans le manchon de fourniture d'eau
- une seconde vanne (34), qui est également munie d'une membrane servant d'élément de fermeture (36), constituée d'un matériau résilient, associée aux passages (48) agencés dans une paroi (42) au fond du carter (11) de manière à communiquer sur un premier côté (48) avec l'intérieur (49) de cette dernière et sur l'autre côté (50) avec l'intérieur de la baignoire (12), pour l'évacuation de l'eau résiduelle à partir de l'orifice à la fin de l'hydro-massage, et pouvant également empêcher l'entrée d'eau dans le carter (11) de l'orifice (10) lorsque la baignoire est en fonctionnement normal sans hydro-massage,
**caractérisé en ce que**
- la membrane (22) de la première vanne (20), dans la position stable, a une configuration sensiblement concave, la concavité étant tournée vers une paroi de sortie (24) du tuyau d'air (13), tandis que son contour vient en contact avec ladite paroi à l'extérieu de la zone dans laquelle sont agencés les passages (26) pour l'air à partir du tuyau d'air vers la buse de fourniture d'air (18), et
- ladite membrane (36) est constituée d'un élément sensiblement flottant qui est agencé dans une chambre (46) agencée en dessous de ladite paroi (42) au fond du carter (11) de l'orifice (10), et peut fermer lesdits passages (48) lorsque ladite chambre (46) est remplie d'eau, et ouvrir les mêmes passages (48) lors direction vidage graduel de l'eau à partir de ladite chambre (46).

2. Orifice d'hydro-massage (10) selon la revendication 1, **caractérisé en ce que** ladite membrane (22) a, dans une zone sensiblement centrale de celle-ci, un prolongement faisant saillie (28), dont l'extrémité (30) est agrandie et se positionne dans une siège située dans la paroi extérieure (24) du tuyau d'air (13), la coopération entre ladite paroi agrandie (30) du prolongement (28) dans ledit siège de la paroi (24) empêchant des déplacements de la membrane (22) dans la direction de la buse de fourniture d'air (18).

3. Orifice d'hydro-massage (10) selon la revendication 2, **caractérisé en ce que**, lorsque de l'eau est alimentée dans le manchon de fourniture d'eau de coupe transversale convergente/divergente, l'effet d'aspiration provoque une déformation élastique de la membrane (22), qui se déplace loin de ladite paroi de sortie (24) du tuyau (13), en libérant les passages (26) pour l'air qui est ainsi introduit dans le carter (11) de l'orifice (10).

4. Orifice d'hydro-massage (10) selon l'une quelconque des revendications 1 à 3, **caractérisé en ce que** la déformation élastique de la membrane (22), dans ledit second état de la première membrane (20), est limitée par des butées (32) agencées dans le carter (11) de l'orifice (10), et agencées derrière ladite membrane (22).

5. Orifice d'hydro-massage (10) selon l'une quelconque des revendications 1 à 4, **caractérisé en ce que**, à la fin de ladite aspiration provoquée par l'entrée de l'écoulement d'eau dans le manchon de fourniture d'eau, ladite membrane (22) de la première vanne (20) est amenée automatiquement par l'intermédiaire d'une déformation élastique dans l'état d'appui.

6. Orifice d'hydro-massage (10) selon l'une quelconque des revendications 1 à 5, **caractérisé en ce que** ladite membrane (22) de la première vanne (20) ne se déplace pas longitudinalement dans le passage entre lesdits états.

7. Orifice d'hydro-massage selon la revendication 1, **caractérisé en ce que** ladite membrane (22) est constituée d'un matériau élastique tel que du caoutchouc ou analogue.

8. Orifice d'hydro-massage selon l'une quelconque des revendications 1 à 7, **caractérisé en ce que** la membrane (36) de ladite seconde vanne (34) a une forme qui est sensiblement concave dans la direction de ladite paroi (42) au fond du carter (11) de l'orifice (10).

9. Orifice d'hydro-massage (10) selon l'une quelconque des revendications 1 à 7, **caractérisé en ce que** la membrane (36) de ladite seconde vanne (34) a une forme sensiblement plate.

10. Orifice d'hydro-massage selon l'une quelconque des revendications 1 à 9, **caractérisé en ce que** la membrane (36) de ladite seconde vanne (34) a, dans une zone sensiblement centrale de celle-ci, un prolongement faisant saillie (38), dont l'extrémité (40) est agrandie et se positionne dans un siège de ladite paroi (42), au fond du carter (11) de l'orifice (10), tandis que le corps dudit prolongement (38) peut coulisser, dans une mesure limitée, à l'intérieur d'un passage agencé dans ladite paroi (42).
